# EUROPÄISCHE PATENTSCHRIFT

(11) **EP 2 475 506 B1**
(45) Veröffentlichungstag und Bekanntmachung des Hinweises auf die Patenterteilung: **30.11.2016**
(21) Anmeldenummer: 10760215.3
(22) Anmeldetag: 10.09.2010
(51) Int. Cl.: B29C 65/02, B29C 65/54, A61J 17/00, B29C 65/18, B29L 22/00, B29K 7/00, B29K 21/00, B29K 83/00

(54) **VERFAHREN ZUR ZUMINDEST ABSCHNITTSWEISEN VERBINDUNG VON WÄNDEN EINES ELASTISCHEN HOHLKÖRPERS SOWIE HOHLKÖRPER**
METHOD FOR JOINING AT LEAST PARTIALLY THE WALLS OF AN ELASTICAL HOLLOW BODY AND HOLLOW BODY
PROCEDE POUR RELIER AU MOINS PARTIELLEMENT LES PAROIS D'UN CORPS CREUX ELASTIQUE ET CORPS CREUX

(30) Priorität: 11.09.2009 AT 14442009
(43) Veröffentlichungstag der Anmeldung: 18.07.2012
(73) Patentinhaber: Mam Babyartikel Gesellschaft m.b.H., 1160 Wien (AT)
(72) Erfinder: RÖHRIG, Peter, A-1160 Wien (AT); ROHACZEK, Thomas, A-1210 Wien (AT)
(74) Vertreter: Sonn & Partner Patentanwälte
(86) Internationale Anmeldenummer: PCT/AT2010/000326
(87) Internationale Veröffentlichungsnummer: WO 2011/029116

(56) Entgegenhaltungen:
- EP-A2- 0 478 167
- EP-A2- 1 086 804
- AT-A4- 506 295
- FR-A- 1 119 283
- JP-A- 9 267 392
- US-A- 1 289 777
- US-A- 3 923 067

## Beschreibung

Die Erfindung betrifft ein Verfahren zur zumindest abschnittsweisen Verbindung von Wänden eines Hohlkörpers aus einem elastischen Material mit zumindest einer Öffnung, wobei in die Öffnung des vorgeformten Hohlkörpers, dessen Wände einen im Wesentlichen bauchigen Hohlraum ausbilden, ein Verbindungsmaterial in viskoser Form zwischen zwei Wandabschnitten eingebracht wird oder zueinander zugewandten Oberflächen der Wandabschnitte zwecks Ausbildung eines viskosen Verbindungsmaterials aufgeschmolzen werden, und anschließend das Verbindungsmaterial unter chemischer bzw. physikalischer Vernetzung mit den Oberflächen des Hohlkörpers in einen elastischen Zustand überführt wird, so dass die Wandabschnitte des Hohlkörpers im Bereich des Verbindungsmaterials zumindest abschnittsweise miteinander verbunden sind, sowie einen Hohlkörper aus einem elastischen Material mit einem im Wesentlichen bauchigen Hohlraum, wobei die den bauchigen Hohlraum ausbildenden Wände des Hohlkörpers in einem Verbindungsbereich zumindest abschnittsweise miteinander verbunden sind, wobei miteinander verbundene Oberflächen der Wände chemisch bzw. physikalisch miteinander vernetzt sind.

Um einen vollständig geschlossenen Hohlkörper herzustellen bzw. eine Öffnung eines Hohlkörpers zumindest teilweise zu verschließen ist es erforderlich die Wände des Hohlkörpers zumindest abschnittsweise miteinander zu verbinden. Hierbei ist insbesondere bekannt die Wandabschnitte miteinander zu verkleben. Eine Verklebung der Wandabschnitte eines elastischen Hohlkörpers ist jedoch für verschiedenste Anwendungen nachteilig, insbesondere sofern der Hohlkörper auf Zug beansprucht wird, da der Hohlkörper sodann im verklebten Bereich eine von dem übrigen Hohlkörper unterschiedliche Elastizität aufweist, so dass sich bei einer Zug- oder Dehnungsbeanspruchung üblicherweise die Klebestellen ungewollterweise, auf einfache Weise voneinander lösen.

Um ein ballonförmiges medizinisches Implantat herzustellen ist es aus der US 2002/0173698 A1 grundsätzlich bekannt eine Ventilvorrichtung mehrmals in ein Silikonbad zu tauchen. Hierdurch wird die Ventilvorrichtung, die bevorzugt aus dem gleichen Material wie das Material des Silikonbades besteht, mit einem Ballon umhüllt, der mittels chemischer Vernetzung mit der Ventilvorrichtung verbunden ist.

Aus der GB 2 192 549 A ist weiters ein Babyschnuller aus einem Silikonmaterial bekannt, der im Wesentlichen vollständig mit einem Silikonmaterial gefüllt ist. Das als Füllmaterial vorgesehen Silikonmaterial weist hierbei eine geringere Härte als das Silikonmaterial der äußeren Hülle auf.

In der US 1,289,777 A ist ein Verfahren zur Herstellung eines Gummihohlkörpers offenbart, welcher zeitweise eine Öffnung zur Entnahme eines Kerns aufweist, wobei diese Öffnung nachfolgend geschlossen wird, um den fertigen Hohlkörper herzustellen. Insbesondere wird hierin die Herstellung von Gummiflaschen beschrieben.

Die JP 9-267392 A offenbart einen aus einem thermoplastischen Elastomer bestehender Hohlkörper, welcher eine schlitzförmige Öffnung zum Entformen eines Kerns aufweist. Die gegenüberliegenden Wände der schlitzförmigen Öffnung werden aufgeschmolzen und miteinander in Berührung gebracht, sodass die schlitzförmige Öffnung geschlossen wird.

Die EP 1 086 804 A2 zeigt ein Verfahren zur Herstellung von Silikonbeuteln für medizinische Lösungen ausgehend von einem dünnwandigen, nahtlosen Silikonschlauch.

Ziel der vorliegenden Erfindung ist es hingegen ein Verfahren bzw. einen Hohlkörper zu schaffen, bei welchem die Wandabschnitte zumindest abschnittsweise derart miteinander verbunden sind, dass ein ungewolltes Lösen der Wandabschnitte voneinander vermieden wird, insbesondere auch wenn der Hohlkörper im Verbindungsbereich der beiden Wandabschnitte auf Zug beansprucht wird.

Erfindungsgemäß wird dies durch ein Verfahren der eingangs angeführten Art erzielt, bei dem eine innere Oberfläche zumindest einer Wand einen gegenüber der übrigen Oberfläche der Wand erhabenen Steg mit zumindest einer Vertiefung aufweist, welcher Steg einen schaftförmigen, an den bauchigen Hohlraum anschließenden Verbindungsbereich vom bauchigen Hohlraum abtrennt, wobei zur Ausbildung eines Kanals, der sich vom bauchigen Hohlraum über den Verbindungsbereich mit der Öffnung erstreckt und den Hohlraum mit der Öffnung des Hohlkörpers verbindet, ein von der Öffnung in den bauchigen Hohlraum verlaufendes Linearelement in den Hohlkörper und die Vertiefung zwischen den beiden Wandabschnitten der Wände des Hohlkörpers eingelegt wird, bevor die beiden Wandabschnitte miteinander verbunden werden. Durch das Einbringen eines viskosen Verbindungsmaterials, d.h. insbesondere eines unvernetzten Kautschuks, vorzugsweise eines Silikonkautschuks, oder eines geschmolzenen thermoplastischen Elastomers (TPE) bzw. - im Falle eines thermoplastischen Elastomers - dem abschnittsweisen Aufschmelzen der Wandabschnitte selbst, verbindet sich das viskose Verbindungsmaterial sodann im Falle eines (Silikon-)Kautschukmaterials unter chemischer Vernetzung mit den elastischen Oberflächen des Hohlkörpers bzw. ergibt sich durch die Ausbildung physikalischer Vernetzungspunkte bei thermoplastischen Elastomeren - im Gegensatz zu einer Verklebung - eine innige Verbindung der beiden Wandabschnitte welche insbesondere bei einer Beanspruchung auf Zug bzw. Dehnung unlösbar bleibt. Je nach dem aus welchem Material der vorgefertigte Hohlkörper besteht, werden die Wandabschnitte im Falle eines Silikon-, Gummi- oder Latexmaterials somit zusammen vulkanisiert; im Falle eines thermoplastischen Elastomers hingegen entspricht die Art der Verbindung der beiden Wandabschnitte im Wesentlichen einer Verschweißung. Der Hohlkörper dessen Wandabschnitte bis auf einen Kanal im Verbindungsbereich miteinander verbunden werden, kann nach Verbindung der Wandabschnitte zu verschiedensten Zwecken eingesetzt werden. Der Kanal, der im Verbindungsbereich ausgebildet ist, kann dabei beispielsweise als Entlüftungs- oder Saugkanal verwendet werden. Insbesondere ist es hierbei möglich derartige Hohlkörper, die auch nach der Verbindung der Wandabschnitte einen Hohlraum einschließen, als Saugelement eines Schnullers, als Pumpelement bzw. Saugpumpe, Balg, Aktuator, Druck-Ausgleichsblase oder -balg, Ansaughilfe, als Pipette, Dosierhilfe, Feder- und Dämpfungselement, Schwimmkörper oder beispielsweise Ummantelung zwecks Aufprallschutz zu verwenden.

Um den Verbindungsprozess bzw. den Übergang des Verbindungsmaterials vom viskosen in den elastischen Zustand zu beschleunigen ist es günstig, wenn der Hohlkörper erwärmt wird. Eine Erwärmung des Hohlkörpers kann auf einfache Weise erzielt werden, wenn der Hohlkörper in eine Kavität einer Form eingelegt wird, die auf einer Temperatur zwischen 140°C und 240°C, insbesondere von 200°C vorgewärmt ist.

Um die Gesamtbreite, d.h. Wandstärke, der miteinander verbundenen Wandabschnitte gering zu halten bzw. eine zuverlässige Verbindung zwischen dem viskosen Verbindungsmaterial und den Wandabschnitten des Hohlkörpers zu erzielen, ist es von Vorteil, wenn die Wandabschnitte des Hohlkörpers im Verbindungsbereich unter Ausbildung eines Spaltes zwischen den Wandabschnitten aneinander angenähert oder gepresst werden, bevor das viskose Verbindungsmaterial in den Spalt eingebracht wird.

Zwecks einer innigen Verbindung der beiden Wandabschnitte können erhabene Wandabschnitte im Bereich des Spaltes abschnittsweise aneinander anliegen, d.h. dass im Verbindungsbereich der Spalt nicht durchgängig ausgebildet ist sondern Abschnitte vorgesehen sind, in welchen die Wandabschnitte unmittelbar aneinander anliegen. Sofern nicht angestrebt wird, dass die Wandabschnitte im Verbindungsbereich abschnittsweise aneinander anliegen, können derartige erhabene Wandabschnitte im Verbindungsbereich selbstverständlich gänzlich entfallen.

Wenn der Spalt eine Höhe bzw. Dicke zwischen 10% und 80%, insbesondere von ca. 40%, der Gesamtdicke des Hohlkörpers im Verbindungsbereich aufweist, wird vorteilhafterweise ein Verbindungsbereich relativ geringer Wandstärke erzielt.

In zeitlicher Hinsicht ist es günstig, wenn die Wandabschnitte zum Überführen das Verbindungsmaterials vom viskosen in den elastischen Zustand zwischen 3 s und 120 s aneinander angenähertoder gepresst werden, wobei die Anpress- bzw. Annäherungszeit von der Art des Materials und der Wandstärke des Hohlkörpers im Verbindungsabschnitt abhängig ist.

Um eine klare Trennung zwischen den verbundenen Wandabschnitten und dem auch nach der abschnittsweisen Verbindung der Wandabschnitte als Hohlraum ausgebildeten Teil des Hohlkörpers sicher zu stellen, ist es günstig wenn vorzugsweise stegförmige Wandabschnitte in einem an den Verbindungsbereich anschließenden Dichtungsbereich, derart aneinander gepresst werden, dass ein Eintritt des viskosen Verbindungsmaterials in den an den Verbindungsbereich anschließenden Hohlraum verhindert wird.

Hierbei hat sich als günstig herausgestellt, wenn während des Einbringens des viskosen Verbindungsmaterials die Wandstärke des Hohlkörpers im Dichtungsbereich auf zumindest 60% der Wandstärke vor der Verbindung der Wandabschnitte reduziert wird.

Eine besonders innige Verbindung der Wandabschnitte, so dass selbst im Schnitt eine Verbindung bzw. Verbindungsnaht kaum sichtbar ist, ist gewährleistet wenn als Verbindungsmaterial ein Material mit im Wesentlichen gleichem chemischem Aufbau verwendet wird, wie das Material aus welchem der Hohlkörper besteht. Somit ergibt sich nach Verbindung der beiden Wandabschnitte im Wesentlichen ein einstückiger Wandabschnitt.

Um ein mit dem Hohlkörper fest verbundenes äußeres Element, z.B. einen Griff, ein Schild, oder dergleichen, vorzusehen, ist es günstig wenn, zugleich mit der Verbindung der Wandabschnitte ein außerhalb des Hohlkörpers angeordnetes, mit dem Verbindungsmaterial einstückiges Element ausgebildet wird.

Der Hohlkörper der eingangs angeführten Art ist erfindungsgemäß dadurch definiert, dass der Verbindungsbereich an den bauchigen Hohlraum anschließt, schaftförmig ist und eine Öffnung aufweist, wobei im Verbindungsbereich zumindest ein den Hohlraum mit der Öffnung des Hohlkörpers verbindender Kanal zwischen zwei Wandabschnitten der Wände des Hohlkörpers ausgebildet ist, wobei eine innere Oberfläche zumindest einer Wand einen im Wesentlichen den Verbindungsbereich vom Hohlraum abtrennenden, gegenüber der übrigen Oberfläche der Wand erhabenen Steg mit zumindest einer Vertiefung aufweist.

Durch die chemische bzw. physikalische Vernetzung der Oberflächen der Wände direkt miteinander bzw. mittels eines Verbindungsmaterials ergibt sich eine besonders zuverlässige, insbesondere auch bei Zugbeanspruchungen unlösbare Verbindung. Für verschiedenste Anwendungszwecke z.B. Verwendung des Hohlkörpers als Saugelement oder Pipette ist erfindungsgemäß ein im Wesentlichen ein bauchiger Hohlraum vorgesehen ist, an welchen ein schaftförmiger Verbindungsbereich mit der Öffnung anschließt. Im Falle eines (Schnuller-)Saugelements wird der bauchige Hohlraum als Saugkörper verwendet, wobei in vorteilhafter Weise durch die Verbindung der beiden Wandabschnitte im schaftförmigen Verbindungsbereich der Schnullerschaft gegenüber herkömmlichen Hohlkörpersaugern bei welchen die Wandabschnitte nicht abschnittsweise miteinander verbunden sind, eine geringere Wandstärke aufweisen kann.

Um zuverlässig zu vermeiden, dass viskoses Verbindungsmaterial vom Verbindungsbereich in jenen Bereich des Hohlkörpers eindringt, welcher den Hohlraum ausbildet, weist demnach die innere Oberfläche zumindest einer Wand einen im Wesentlichen den Verbindungsbereich vom Hohlraum abtrennenden gegenüber der übrigen Oberfläche der Wand erhabenen Steg auf, welcher vorzugsweise zwecks Ausbildung einer Mündung des Kanals in den Hohlraum eine Vertiefung aufweist.

Hierbei ist insbesondere günstig, dass im Verbindungsbereich der beiden Wände ein Verbindungsmaterial vorgesehen ist, das im Wesentlichen den gleichen chemischen Aufbau wie das Material des Hohlkörpers aufweist. Der fertiggestellte Hohlkörper kann somit vorteilhaft für verschiedenste Zwecke z.B. als Saugelement eines Schnullers, Saugpumpe, Aktuator, Pipette, etc. verwendet werden.

Wenn die innere Oberfläche zumindest einer Wand des Hohlkörpers im Verbindungsbereich zumindest einen erhabenen Abstandhalter aufweist, so können die verbindenden Wandabschnitte auf einfache Weise aneinander gepresst werden, so dass sich über einen Großteil zwischen den beiden inneren Oberflächen ein Spalt ausbildet, der lediglich im Bereich der Abstandhalter unterbrochen ist. Alternativ können die Wandabschnitte auch ohne Abstandhalter unter Ausbildung eines Spaltes aneinander angenähert werden.

Um zu vermeiden, dass der an den Kanal angrenzende Bereich des Hohlraums den Kanal luftdicht verschließt, so dass ein Druckausgleich nicht möglich wäre, ist es von Vorteil, wenn die innere Oberfläche, insbesondere benachbart einer Mündung des Kanals in den Hohlraum, im Bereich des Hohlraums eine Erhebung aufweist. Durch das Vorsehen einer derartigen Erhebung ist sichergestellt, dass die beiden Wände des Hohlkörpers im Mündungsbereich eines etwaigen Kanals nicht flächig aufeinander anliegen können; somit ist gewährleistet, dass der elastische Hohlkörper in seine entspannte Ausgangsposition aufgrund eines Druckausgleichs entspannen kann.

Weiters ist es zur Erhöhung der elastischen Rückstellkraft des Hohlkörpers zweckmäßig, wenn die Wand im Bereich des Hohlraums in dem an den Verbindungsbereich anschließenden Abschnitt, ein größere Wandstärke aufweist als im Verbindungsbereich.

Um den Hohlkörper für verschiedenste Zwecke verwenden zu können, kann ein mit dem Verbindungsmaterial einstückig ausgebildetes Element, z.B. ein Schild, ein Griffelement, etc., außerhalb des Hohlkörpers vorgesehen sein. Das äußere Element kann hierbei im Vergleich zum Hohlkörper eine andere Farbe, Steifigkeit etc. aufweisen, wobei somit ein einstückiges 2-Komponenten-Element umfassend den Hohlkörper zur Verfügung gestellt wird.

Wenn einstückig mit dem im schaftförmigen Verbindungsbereich vorgesehenen Material ein Schnullerschild ausgebildet ist, kann auf einfache Weise in der Art einer Zwei-Komponenten-Ausgestaltung eine unlösbare Verbindung zwischen dem als Saugteil ausgebildeten Hohlkörper und dem die Einführbarkeit des Saugteils in die Mundhöhle begrenzenden Schild erzielt werden. Je nach Verwendung des erfindungsgemäßen Hohlkörpers ist es günstig wenn der Hohlkörper sowie das Verbindungsmaterial aus einem Elastomer, insbesondere Silikon, einem thermoplastischen Elastomer (TPE), oder Latex besteht.

Die Erfindung wird nachstehend anhand eines bevorzugten Ausführungsbeispiels, auf das es jedoch nicht beschränkt sein soll, im Detail erläutert. Im Einzelnen zeigen in den Zeichnungen:
Fig. 1 ein perspektivische Ansicht eines Saugelements;
Fig. 2 eine Ansicht des Saugelements gemäß Fig. 1;
Fig. 3 eine Draufsicht auf die Spitze des Saugelements gemäß Fig. 2;
Fig. 4 eine Draufsicht auf den Schaft des Saugelements gemäß Fig. 2;
Fig. 5 einen Schnitt gemäß der Linie V-V in Fig. 2;
Fig. 6 einen Schnitt gemäß der Linie VI-VI in Fig. 5;
Fig. 7 eine Schnittansicht eines mit einem Schnullerschildteil verbundenen Saugelements;
Fig. 7a eine Schnittansicht ähnlich Fig. 7, wobei das Schnullerschild einstückig mit dem Saugelement ausgebildet ist;
Fig. 8 eine Schnittansicht eines vorgeformten Hohlkörpers mit noch nicht verbundenen Wandabschnitten;
Fig. 9 eine perspektivische Ansicht einer Vorrichtung zum Verbinden der Wandabschnitte im Schaftbereich des Saugelements; und
Fig. 10 die perspektivische Ansicht der Vorrichtung mit einem eingelegten Saugelement.

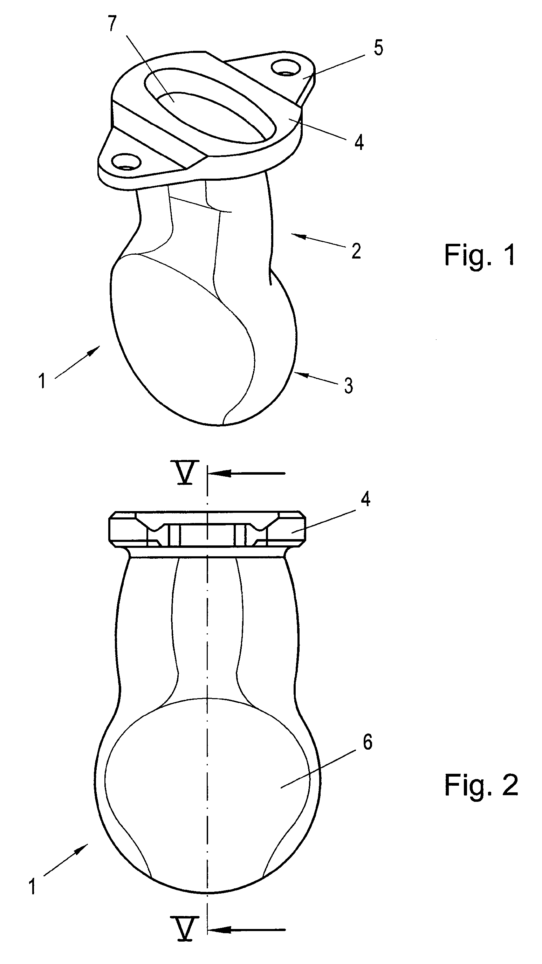

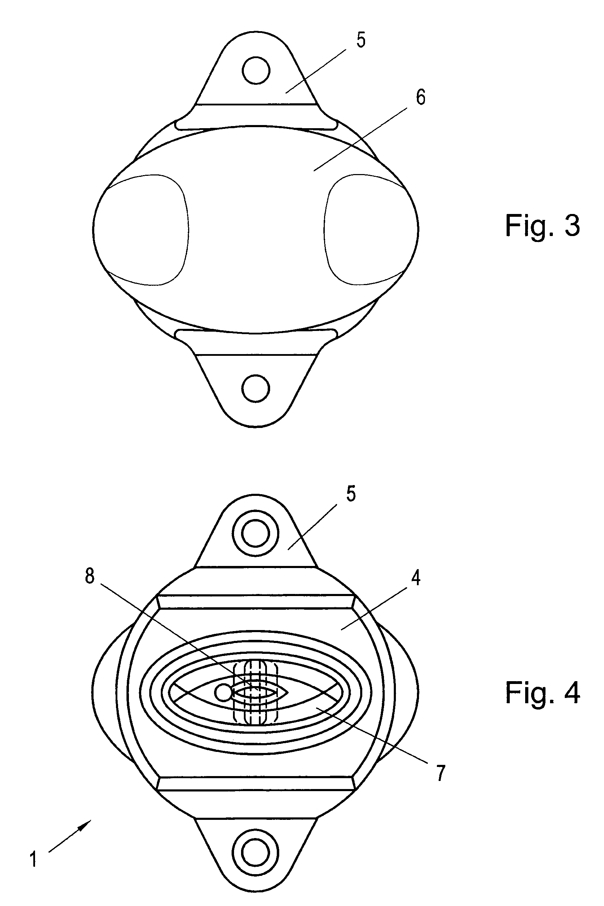

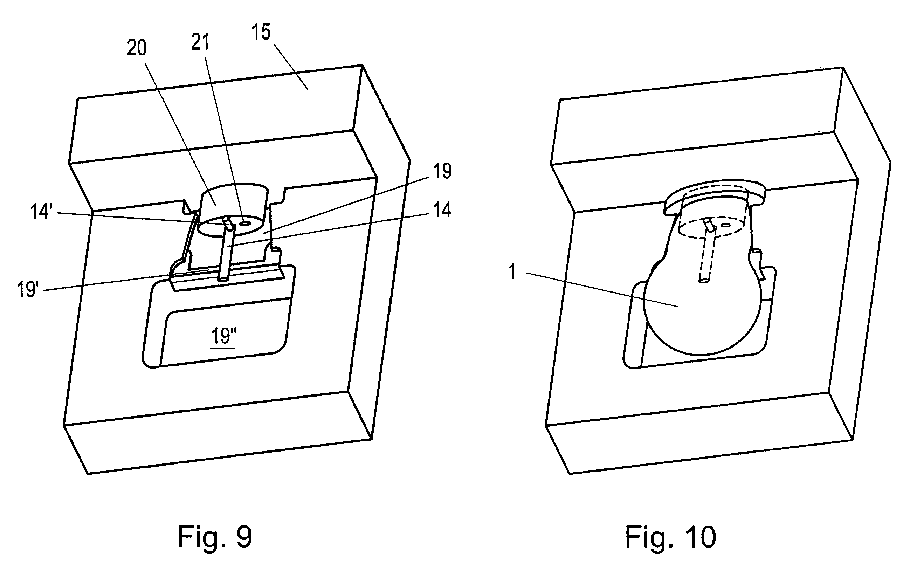

In Fig. 1 und 2 ist ein als Saugelement ausgebildeter Hohlkörper 1 mit einer im Schaftbereich 2 vorgesehenen Öffnung 7 gezeigt. Der Schaftbereich 2 schließt hierbei an einen im Wesentlichen geschlossen ausgebildeten bauchigen Saugkörper 3 mit einem Hohlraum 3' an. Endseitig weist der Schaftbereich 2 einen Flansch 4 auf an welchem dreiecksförmige Flanschvorsprünge 5 ausgebildet sind. Die Flanschvorsprünge 5 ermöglichen insbesondere den Hohlkörper 1, nachdem dieser vorgeformt wurde, aus eine Spritzgussform exakt positioniert zu entnehmen und auf einfache Weise den als Vorformling hergestellten Hohlkörper 1 zur Verbindung von Wandabschnitten 10 in eine Form 15 (vgl. Fig. 9 und 10) einzusetzen. Der Hohlkörper 1 kann unterschiedliche Oberflächenbeschaffenheiten aufweisen, wobei wie in den Zeichnungen dargestellt, insbesondere im Bereich der äußeren Oberfläche des bauchigen Saugkörpers 3 eine aufgeraute Oberflächenstruktur 6 vorgesehen sein kann, wobei hier die gemittelte Rautiefe R_{z} vorzugsweise zwischen 10 µm und 50 µm beträgt. Die Oberflächenrauezone 6 erstreckt sich hierbei durchgehend über die Spitze des Saugelements 1, wie insbesondere in Fig. 3 ersichtlich.

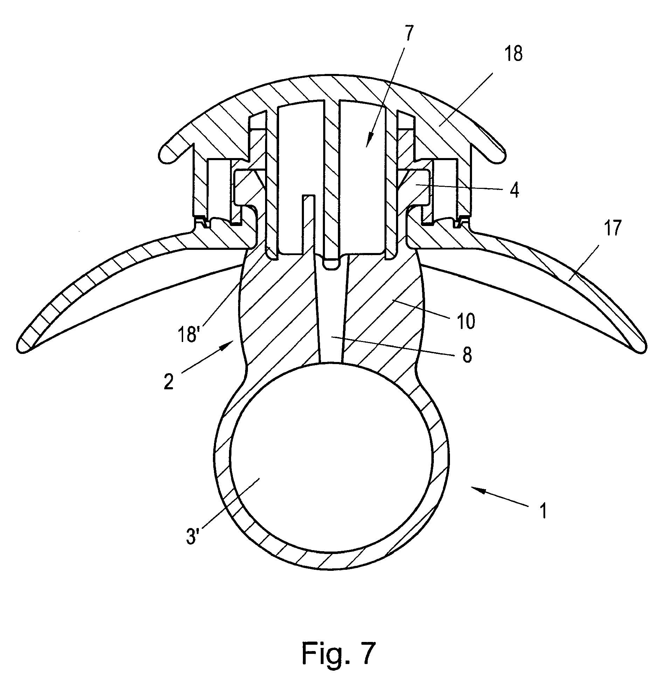

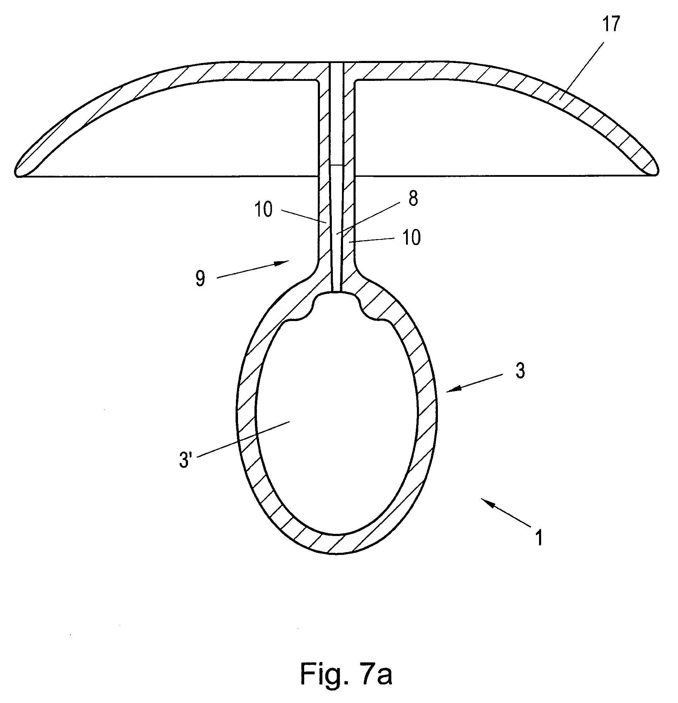

In Fig. 4 ist im Flanschbereich die vergleichsweise große Öffnung 7 ersichtlich, welche zur Montage an einem Schnullerschild 17 (vgl. Fig. 7) vorgesehen ist. Bei anderen Verwendungen, z.B. als Saugpumpe, Pipette oder dgl. kann diese querschnittsgroße Öffnung selbstverständlich entfallen bzw. kleiner ausgebildet sein. Zudem ist in Fig. 4 ersichtlich, dass ein Kanal 8 in der Öffnung 7 mündet.

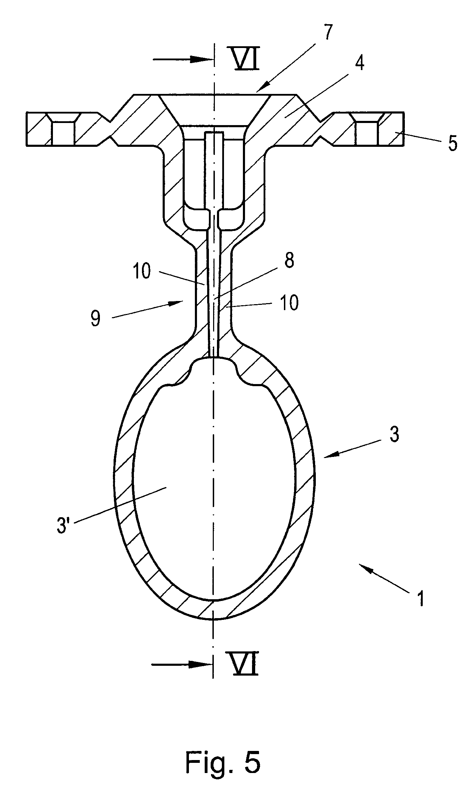

Wie in Fig. 5 gezeigt erstreckt sich der Kanal 8 vom Hohlraum 3' über einen Verbindungsbereich 9, welcher im Wesentlichen mit dem Schaft 2 zusammenfällt. Im Verbindungsbereich 9 sind die Wandabschnitte 10 des Hohlkörpers 1 - abgesehen von dem Kanal 8 - miteinander verbunden. Der Kanal 8 stellt somit eine Verbindung vom Hohlraum 3' in die querschnittsgrößere Öffnung 7 bzw. der Umgebung her, so dass zuverlässig ein Druckausgleich zwischen dem Hohlraum 3' des Hohlkörpers 1 und der Umgebung erfolgen kann.

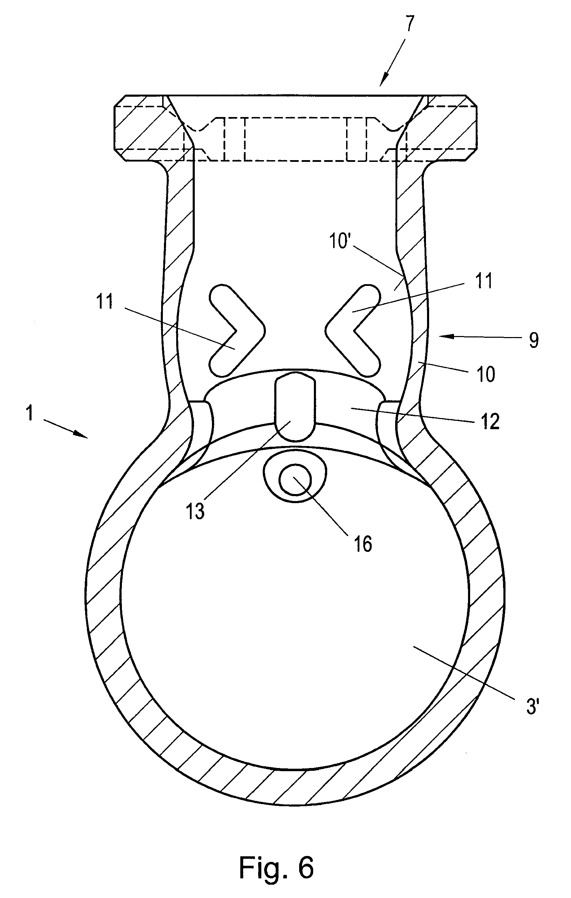

In der Schnittansicht gemäß Fig. 6 ist ersichtlich, dass das Saugelement 1 im Verbindungsbereich 9 eine geringere Wandstärke als im Bereich des Saugkörpers 3 aufweist; vorzugsweise beträgt die Wandstärke im Verbindungsbereich zwischen 0,6 mm und 1,2 mm. Zudem ist in dem an den Verbindungsbereich anschließenden Bereich des Hohlraums 3' eine erhöhte Wandstärke vorgesehen (vgl. auch Fig. 5), so dass der Saugkörper 3 eine gewisse Formstabilität aufweist und somit sicher gestellt ist, dass er nach dem Zusammendrücken wieder in seine Ausgangsstellung zurückgeht.

Zudem sind Abstandselemente 11 ersichtlich über welche sichergestellt ist, dass beim Zusammendrücken der Wandabschnitte 10 im Verbindungsbereich 9 ein Spalt zwischen den inneren Oberflächen 10' verbleibt, in welchem sich ein über die Öffnung 7 eingebrachtes elastisches Verbindungsmaterial, insbesondere Silikon, vor dem Übergang in einen elastischen Endzustand im Verbindungsbereich 9 verteilen kann. Sofern die inneren Oberflächen der Wandaschnitte 10 im Verbindungsbereich 9 jedoch nicht aneinander gepresst werden, sondern in einer Form lediglich derart aneinander angenähert werden, dass zwischen den inneren Oberflächen die gewünschte Spaltbreite zur Aufnahme des viskosen Material zwecks Verbindung der Wandabschnitte 10 erzielt wird, können die Abstandselemente 11 gänzlich entfallen.

Um zu verhindern, dass das viskose Verbindungsmaterial in den Hohlraum 3' eindringt ist ein erhabener Steg 12 vorgesehen, der den Verbindungsbereich 9 vom Hohlraum 3' trennt. Der Steg 12 weist hierbei eine Vertiefung 13 auf, in welcher während des Einbringens des viskosen Verbindungsmaterials ein Stift 14 einer Form 15 zu liegen kommt (vgl. Fig. 9 und 10), so dass sichergestellt ist, dass über die Vertiefung 13 kein viskoses Verbindungsmaterial in das Innere des Hohlraums 3' eindringen kann. Zugleich wird durch den Stift 14 der Form 15 der Kanal 8 ausgebildet, welcher somit in der Vertiefung 13 des Stegs 12 mündet; hierdurch ist nach Vereinigung der Wandabschnitte 10 zuverlässig ein Druckausgleich zwischen dem Hohlraum 3' und der Umgebung möglich.

Benachbart der Vertiefung 13, welche zugleich die Mündung des Kanals 8 in den Hohlraum 3' bildet, ist an der inneren Oberfläche des Hohlraums 3' eine warzenförmige Erhebung 16 vorgesehen. Hierdurch ist sichergestellt, dass beim Zusammendrücken des Hohlraums 3' die Wände des Hohlraums 3' die Vertiefung 13 bzw. den Kanal 8 nicht luftdicht abschließen, wodurch ein Druckausgleich unmöglich wäre. Somit ist durch die Erhebung bzw. den Vorsprung 16 zuverlässig ein Druckausgleich gewährleistet.

In der Schnittansicht gemäß Fig. 7 ist ersichtlich, dass der im Schaftbereich 2 nach der Verbindung der beiden Wandabschnitt 10 einwandig ausgebildete Schaft 2 in herkömmlicher Weise an einem Schnullerschild 8 montierbar ist. Hierfür ist ein an sich bekanntes Befestigungselement 18 vorgesehen, welches mit einem zapfenförmigen Vorsprung 18' in die querschnittsgrößere Öffnung 7 des Hohlkörpers 1 eindringt, wobei der Schaft 2 bzw. der Flansch 4 sodann form- und kraftschlüssig zwischen dem Schnullerschild 17 und dem Befestigungsteil 18 aufgenommen wird. Da der Kanal 8 im Verbindungsbereich mit dem Schnullerschild 17 bzw. dem Befestigungsteil 18 offen verbleibt ist zuverlässig eine Entlüftung aus dem Hohlraum 3' sowie ein Druckausgleich mit der Umgebung möglich.

In Fig. 7a ist ein alternatives Ausführungsbeispiel gezeigt, bei welchem ein außerhalb des Hohlkörpers 1 vorgesehenes Element 17' in der Form des Schnullerschilds 17 einstückig mit dem im Verbindungsbereich 9 vorgesehen Verbindungsmaterial ausgestaltet ist. Da das Verbindungsmaterial im Wesentlichen den gleichen chemischen Aufbau wie das Material des Hohlkörpers 1 aufweist, ergibt sich vorteilhafterweise ein zuverlässige, unlösbare Anbindung des Schnullerschilds 17 an den Hohlkörper 1. Da das Verbindungsmaterial zudem durchaus eine höhere Härte als das Material des Hohlkörpers 1 aufweisen kann, kann zugleich - sofern gewünscht - ein Schnullerschild 8 ausgebildet werden, das gegenüber dem Hohlkörper 1 eine größere Steifigkeit aufweist.

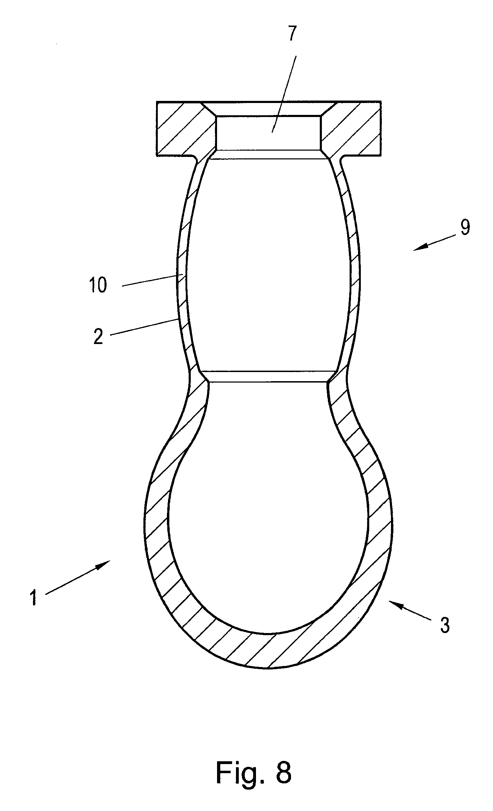

In Fig. 8 ist der vorgeformte Hohlkörper 1 mit einem bauchigen Hohlraum 3' bzw. Saugkörper 3 und einem Schaftbereich 2 in welchem eine Öffnung 7 vorgesehen ist gezeigt, wobei hier die Wandabschnitte 10 im Schaftbereich 2 noch nicht miteinander verbunden sind. Insbesondere ist auch ersichtlich, dass die Wandstärke im Verbindungsbereich 9 bzw. Schaftbereich 2 geringer ist als jene im Bereich des Saugkörpers 3. Nachdem die Wandabschnitte 10 miteinander verbunden sind ist somit die Summe der beiden Wandstärken im Schaftbereich 2 geringer als bei herkömmlichen Hohlkörpersaugern.

In Fig. 9 und 10 ist die Form 15 zur Verbindung der Wandabschnitte 10 des Hohlkörpers 1 gezeigt, hierbei weist die Form 15 die üblicherweise auf ca. 180 - 220 °C vorgewärmt wird eine Kavität 19 zur Aufnahme zumindest eines Abschnitts des Hohlkörpers 1 auf. Der Hohlkörper 1 wird hierbei mit einer Öffnung 7 auf einem im Querschnitt im Wesentlichen elliptischen Sockel 20 angesteckt, an welchen der Stift 14 zur Ausbildung des Kanals 8 sowie ein Stift 14' zur Ausbildung eines Querkanals zwecks Anbindung an einen Luftkanal im Befestigungsteil 18 anschließen. Im Bereich des Schafts 2 ist die Kavität 19 derart ausgebildet, dass bei Auflegen eines Formoberteils die Wandabschnitte 10 im Verbindungsbereich 9 unter Ausbildung eines Spaltes von insbesondere ca. 0,9 mm aneinander angenähert werden. Am Endes Schaftes weist die Kavität 19 eine erhabenen Steg 19' auf, so dass die Wandabschnitte 10 in einem an den Verbindungsbereich 9 anschließenden Dichtungsbereich aneinander gepresst werden, wodurch ein Eintritt des viskosen Verbindungsmaterials in den Hohlraum 3' vermieden wird. An den Steg 19' schließt ein vertiefter Hohlraum 19" zur Aufnahme des den Hohlraum 3' ausbildenden Saugkörpers 3 an.

Nachdem ein entsprechender Oberteil der Form 15 aufgesetzt wurde, um die Wandabschnitte 10 im Verbindungsbereich 9 unter Ausbildung eines freien Spaltes mit einer Breite von ca. 0,3 bis 1,5 mm, insbesondere ca. 0,9 mm, aneinander anzunähern und die Wandstärke der Wandabschnitte 10 im Dichtungsbereich auf zumindest ca. 60% zu reduzieren, kann über eine Einspritzöffnung 21 viskoses Verbindungsmaterial 21 in den Verbindungsbereich 9 eingebracht werden. Hierbei handelt es sich hinsichtlich des chemischen Aufbaus um das selbe Material wie jenes aus welchem der Hohlkörper 1 hergestellt ist, d.h. im Fall von einem Saugelement, vorzugsweise um ein Silikonmaterial, wobei selbstverständlich das Material eine andere Shorehärte, Farbe, etc. aufweisen kann.

Das Silikon, das im Wesentlichen bei Raumtemperatur in den Spalt zwischen den beiden Wandabschnitten 10 des Hohlkörpers 1 im Verbindungsbereich 9 eingebracht wird, verbleibt sodann für ca. 20 s bei ca. 220°C, so dass es sich chemisch mit den Wandabschnitten 10 vernetzt und in einen elastischen Zustand überführt wird. Somit werden die beiden Wandabschnitte 10 im Verbindungsbereich 9 innigst miteinander verbunden, so dass insbesondere auch bei Zugbelastungen keine Gefahr des Lösens der beiden Wandabschnitte 10 voneinander besteht.

Selbstverständlich können mittels eines derartigen Verfahrens beliebige Hohlkörper 1 abschnittsweise in einem Öffnungsbereich miteinander verbunden werden, so dass hierdurch die Herstellung verschiedenster Gegenstände beispielsweise von Pumpelementen, Aktuatoren, Ansaughilfen, Pipetten, Druck-Ausgleichsblasen, Dosierhilfen, Feder- und Dämpfungselementen, Schwimmkörpern sowie Aufprallschutzumhüllungen und dgl. möglich ist.

## Patentansprüche

1. Verfahren zur zumindest abschnittsweisen Verbindung von Wänden eines Hohlkörpers (1) aus einem elastischen Material mit zumindest einer Öffnung (7), wobei in die Öffnung (7) des vorgeformten Hohlkörpers (1), dessen Wände einen im Wesentlichen bauchigen Hohlraum (3') ausbilden, ein Verbindungsmaterial in viskoser Form zwischen zwei Wandabschnitten (10) eingebracht wird oder zueinander zugewandten Oberflächen der Wandabschnitte (10) zwecks Ausbildung eines viskosen Verbindungsmaterials aufgeschmolzen werden, und anschließend das Verbindungsmaterial unter chemischer bzw. physikalischer Vernetzung mit den Oberflächen des Hohlkörpers (1) in einen elastischen Zustand überführt wird, so dass die Wandabschnitte (10) des Hohlkörpers (1) im Bereich des Verbindungsmaterials zumindest abschnittsweise miteinander verbunden sind, wobei eine innere Oberfläche (10') zumindest einer Wand einen gegenüber der übrigen Oberfläche der Wand erhabenen Steg (12) mit zumindest einer Vertiefung (13) aufweist, welcher Steg (12) einen schaftförmigen, an den bauchigen Hohlraum (3') anschließenden Verbindungsbereich (9) vom bauchigen Hohlraum (3') abtrennt, wobei zur Ausbildung eines Kanals (8), der sich vom bauchigen Hohlraum (3') über den Verbindungsbereich (9) mit der Öffnung (7) erstreckt und den Hohlraum (3') mit der Öffnung (7) des Hohlkörpers (1) verbindet, ein von der Öffnung (7) in den bauchigen Hohlraum (3') verlaufendes Linearelement (14) in den Hohlkörper (1) und die Vertiefung (13) zwischen den beiden Wandabschnitten (10) der Wände des Hohlkörpers (1) eingelegt wird, bevor die beiden Wandabschnitte (10) miteinander verbunden werden.

2. Verfahren nach Anspruch 1, **dadurch gekennzeichnet, dass** der Hohlkörper (1) erwärmt wird, vorzugsweise durch Einlegen des Hohlkörpers (1) in eine Kavität (19) einer Form (15), die auf einer Temperatur zwischen 140 und 240°C, insbesondere von 200°C vorgewärmt ist.

3. Verfahren nach einem der Ansprüche 1 oder 2, **dadurch gekennzeichnet, dass** die Wandabschnitte (10) des Hohlkörpers (1) im Verbindungsbereich (9) unter Ausbildung eines Spaltes zwischen den Wandabschnitten (10) aneinander angenähert oder gepresst werden.

4. Verfahren nach einem der Ansprüche 1 bis 3, **dadurch gekennzeichnet, dass** die Wandabschnitte (10) im Bereich des Spaltes abschnittsweise aneinander anliegen.

5. Verfahren nach einem der Ansprüche 1 bis 4, **dadurch gekennzeichnet, dass** die Wandabschnitte (10) zum Überführen das Verbindungsmaterials vom viskosen in den elastischen Zustand zwischen 3 s und 120 s aneinander angenähert oder gepresst werden.

6. Verfahren nach einem der Ansprüche 1 bis 5, **dadurch gekennzeichnet, dass** vorzugsweise stegförmige Wandabschnitte (12) in einem an den Verbindungsbereich (9) anschließenden Dichtungsbereich, derart aneinander gepresst werden, dass ein Eintritt des viskosen Verbindungsmaterials in den an den Verbindungsbereich (9) anschließenden Hohlraum (3') verhindert wird.

7. Verfahren nach einem der Ansprüche 1 bis 6, **dadurch gekennzeichnet, dass** als Verbindungsmaterial ein Material mit im Wesentlichen gleichem chemischem Aufbau verwendet wird, wie das Material aus welchem der Hohlkörper besteht.

8. Hohlkörper (1) aus einem elastischen Material mit einem im Wesentlichen bauchigen Hohlraum (3'), wobei die den bauchigen Hohlraum (3') ausbildenden Wände des Hohlkörpers (1) in einem Verbindungsbereich (9) zumindest abschnittsweise miteinander verbunden sind, wobei miteinander verbundene Oberflächen der Wände chemisch bzw. physikalisch miteinander vernetzt sind, wobei der Verbindungsbereich (9) an den bauchigen Hohlraum (3') anschließt, schaftförmig ist und eine Öffnung (7) aufweist, wobei im Verbindungsbereich (9) zumindest ein den bauchigen Hohlraum (3') mit der Öffnung (7) des Hohlkörpers (1) verbindender Kanal (8) zwischen zwei Wandabschnitten (10) der Wände des Hohlkörpers (1) ausgebildet ist, wobei eine innere Oberfläche (10') zumindest einer Wand einen im Wesentlichen den Verbindungsbereich (9) vom Hohlraum (3') abtrennenden, gegenüber der übrigen Oberfläche der Wand erhabenen Steg (12) mit zumindest einer Vertiefung (13) aufweist.

9. Hohlkörper nach Anspruch 8, **dadurch gekennzeichnet, dass** im Verbindungsbereich (9) der beiden Wände ein Verbindungsmaterial vorgesehen ist, das im Wesentlichen den gleichen chemischen Aufbau wie das Material des Hohlkörpers (1) aufweist.

10. Hohlkörper nach einem der Ansprüche 8 bis 9, **dadurch gekennzeichnet, dass** die innere Oberfläche, insbesondere benachbart einer Mündung des Kanals (8) in den Hohlraum (3'), im Bereich des Hohlraums (3') eine Erhebung (16) aufweist.

11. Hohlkörper nach einem der Ansprüche 8 bis 10, **dadurch gekennzeichnet, dass** die Wand im Bereich des Hohlraums (3') in dem an den Verbindungsbereich (9) anschließenden Abschnitt ein größere Wandstärke aufweist als im Verbindungsbereich (9).

12. Hohlkörper nach einem der Ansprüche 8 bis 11, **dadurch gekennzeichnet, dass** ein mit dem Verbindungsmaterial einstückig ausgebildetes Element (17') außerhalb des Hohlkörpers (1) vorgesehen ist.

13. Hohlkörper nach einem der Ansprüche 8 bis 12, **dadurch gekennzeichnet, dass** der Hohlkörper (1) sowie das Verbindungsmaterial aus einem Elastomer, insbesondere Silikon, einem thermoplastischen Elastomer (TPE), oder Latex besteht.

## Claims

1. A method for the at least partial connecting of walls of a hollow body (1) of an elastic material with at least one opening (7), wherein into the opening (7) of the pre-formed hollow body (1), the walls of which form a substantially bulbous cavity (3'), a connecting material in viscous form is introduced between two wall sections (10) or surfaces of the wall sections (10) facing each other are melted on for the purpose of forming a viscous connecting material, and then the connecting material is transferred into an elastic state under chemical or physical linking with the surfaces of the hollow body (1), so that the wall sections (10) of the hollow body (1) are at least partially connected with each other in the region of the connecting material, wherein an inner surface (10') at least of one wall has a web (12) with at least one depression (13), the web (12) being raised with respect to the remaining surface of the wall, said web (12) separating a shaft-shaped connecting region (9) adjoining the bulbous cavity (3') from the bulbous cavity (3'), wherein for forming a channel (8) extending from the bulbous cavity (3') over the connecting region (9) with the opening (7) and connecting the cavity (3') with the opening (7) of the hollow body (1), a linear element (14), running from the opening (7) into the bulbous cavity (3'), is placed into the hollow body (1) and the depression (13) between the two wall sections (10) of the walls of the hollow body (1) before the two wall sections (10) are connected with each other.

2. The method according to Claim 1, **characterized in that** the hollow body (1) is heated, preferably by placing the hollow body (1) into a cavity (19) of a mould (15), which is pre-heated to a temperature of between 140 and 240°C, in particular of 200°C.

3. The method according to one of Claims 1 or 2, **characterized in that** the wall sections (10) of the hollow body (1) are brought close or pressed to each other in the connecting region (9) with the formation of a gap between the wall sections (10).

4. The method according to one of Claims 1 to 3, **characterized in that** the wall sections (10) lie partially against each other in the region of the gap.

5. The method according to one Claims 1 to 4, **characterized in that** the wall sections (10) are brought close or pressed to each other for between 3 s and 120 s for the transfer of the connecting material from the viscous into the elastic state.

6. The method according to one of Claims 1 to 5, **characterized in that** preferably web-form wall sections (12) are pressed to each other in a sealing region adjoining the connecting region (9), such that an entry of the viscous connecting material into the cavity (3') adjoining the connecting region (9) is prevented.

7. The method according to one of Claims 1 to 6, **characterized in that** as connecting material, a material is used having substantially the same chemical structure as the material of which the hollow body consists.

8. A hollow body (1) of an elastic material with a substantially bulbous cavity (3'), wherein the walls of the hollow body (1) forming the bulbous cavity (3') are at least partially connected with each other in a connecting region (9), wherein surfaces of the walls which are connected with each other are linked with each other chemically or physically, wherein the connecting region (9) adjoins to the bulbous cavity (3'), is shaft-shaped, and comprises an opening (7), wherein in the connecting region (9) at least one channel (8) is provided, connecting the bulbous cavity (3') with the opening (7) of the hollow body (1), between two wall sections (10) of the walls of the hollow body (1), wherein an inner surface (10') at least of one wall has a web (12), raised with respect to the remaining surface of the wall, with at least one depression (13), the web (12) substantially separating the connecting region (9) from the cavity (3').

9. The hollow body according to Claim 8, **characterized in that** in the connecting region (9) of the two walls, a connecting material is provided which has substantially the same chemical structure as the material of the hollow body (1).

10. The hollow body according to one of Claims 8 to 9, **characterized in that** the inner surface has an elevation (16), in particular adjacent to an opening of the channel (8) into the cavity (3'), in the region of the cavity (3').

11. The hollow body according to one of Claims 8 to 10, **characterized in that** the wall in the region of the cavity (3'), in the section adjoining the connecting region (9), has a greater wall thickness than in the connecting region (9).

12. The hollow body according to one of Claims 8 to 11, **characterized in that** an element (17'), formed in one piece with the connecting material, is provided outside the hollow body (1).

13. The hollow body according to one of Claims 8 to 12, **characterized in that** the hollow body (1) and the connecting material consists of an elastomer, in particular silicone, a thermoplastic elastomer (TPE), or latex.

## Revendications

1. Procédé de solidarisation au moins segmentaire de parois d'un corps creux (1) fait d'un matériau élastique et pourvu d'au moins un orifice (7), un matériau de liaison à l'état visqueux étant introduit entre deux segments de paroi (10) dans l'orifice (7) du corps creux (1) préformé dont les parois forment une cavité (3') sensiblement bombée, ou les surfaces en vis-à-vis des segments de paroi (10) étant fondues de façon à former un matériau de liaison visqueux, puis le matériau de liaison étant amené à un état élastique par réticulation chimique ou physique avec les surfaces du corps creux (1), de façon que les segments de paroi (10) du corps creux se solidarisent entre eux au moins de façon segmentaire, au niveau du matériau de liaison, une surface intérieure (10') d'au moins une paroi comprenant un élément jointif (12) qui est surélevé par rapport au reste de la surface de la paroi et qui présente au moins un creux (13), lequel élément jointif (12) sépare une zone de liaison (9) en forme de tige adjacente à la cavité bombée (3') de la cavité bombée (3'), un élément linéaire (14) s'étendant de l'orifice (7) dans la cavité bombée (3') étant inséré dans le corps creux (1) et le creux (13) entre les deux segments de paroi (10) des parois du corps creux (1) avant que les deux segments de paroi (10) ne soient solidarisés entre eux, pour former un canal (8) qui s'étend à partir de la cavité bombée (3') sur toute l'étendue de la zone de liaison (9) comportant l'orifice (7) et qui relie la cavité (3') à l'orifice (7) du corps creux (1).

2. Procédé selon la revendication 1, **caractérisé en ce que** le corps creux (1) est chauffé, de préférence par insertion du corps creux (1) dans une cavité (19) d'un moule (15) qui est préchauffé à une température comprise entre 140 et 240°C, en particulier de 200°C.

3. Procédé selon l'une quelconque des revendications 1 ou 2, **caractérisé en ce que** les segments de paroi (10) du corps creux (1) sont rapprochés ou pressés les uns contre les autres dans la zone de liaison (9) lors de la formation d'une fente entre les segments de paroi (10).

4. Procédé selon l'une quelconque des revendications 1 à 3, **caractérisé en ce que** les segments de paroi (10) reposent les uns contre les autres de façon segmentaire au niveau de la fente.

5. Procédé selon l'une quelconque des revendications 1 à 4, **caractérisé en ce que** les segments de paroi (10) sont rapprochés les uns des autres ou pressés les uns contre les autres entre 3 s et 120 s pour faire passer le matériau de liaison de l'état visqueux à l'état élastique.

6. Procédé selon l'une quelconque des revendications 1 à 5, **caractérisé en ce que** des segments de paroi (12) de préférence en forme d'élément jointif sont pressés les uns contre les autres dans une zone d'étanchéité adjacente à la zone de liaison (9), de telle manière que cela empêche le matériau de liaison visqueux de pénétrer dans la cavité (3') adjacente à la zone de liaison (9).

7. Procédé selon l'une quelconque des revendications 1 à 6, **caractérisé en ce qu'**on utilise un matériau présentant une structure chimique sensiblement identique à celle du matériau dont le corps creux est constitué.

8. Corps creux (1) fait d'un matériau élastique comprenant une cavité (3') sensiblement bombée, les parois du corps creux (1) formant la cavité (3') bombée étant solidarisées entre elles au moins de façon segmentaire dans une zone de liaison (9), les surfaces solidarisées entre elles des parois étant réticulées les unes avec les autres chimiquement ou physiquement, la zone de liaison (9) étant adjacente à la cavité (3') bombée, étant en forme de tige et présentant un orifice (7), au moins un canal (8) reliant la cavité (3') bombée à l'orifice (7) du corps creux (1) étant formé entre deux segments de paroi (10) des parois du corps creux (1) dans la zone de liaison (9), une surface intérieure (10') d'au moins une paroi comprenant un élément jointif (12) surélevé par rapport au reste de la surface de la paroi, séparant sensiblement la zone de liaison (9) de la cavité (3') et présentant au moins un creux (13).

9. Corps creux selon la revendication 8, **caractérisé en ce qu'**un matériau de liaison, qui présente sensiblement la même structure chimique que celle du matériau du corps creux (1), est prévu dans la zone de liaison (9) des deux parois.

10. Corps creux selon l'une quelconque des revendications 8 et 9, **caractérisé en ce que** la surface intérieure présente une surélévation (16) au niveau de la cavité (3'), en particulier au voisinage d'une embouchure du canal (8) dans la cavité (3').

11. Corps creux selon l'une quelconque des revendications 8 à 10, **caractérisé en ce que** la paroi présente au niveau de la cavité (3'), dans le segment adjacent à la zone de liaison (9), une épaisseur de paroi plus importante que dans la zone de liaison (9).

12. Corps creux selon l'une quelconque des revendications 8 à 11, **caractérisé en ce qu'**un élément (17') réalisé d'une seule pièce avec le matériau de liaison est prévu à l'extérieur du corps creux (1).

13. Corps creux selon l'une quelconque des revendications 8 à 12, **caractérisé en ce que** le corps creux (1) et le matériau de liaison sont constitués d'un élastomère, en particulier de silicone, d'un élastomère thermoplastique (TPE), ou de latex.
